(19) Europäisches Patentamt
European Patent Office
Office européen des brevets

(11) **EP 2 397 865 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
***G01S 3/808*** *(2006.01)*

(21) Anmeldenummer: **10400031.0**

(22) Anmeldetag: **19.06.2010**

(54) **Verfahren und Vorrichtung zum passiven Bestimmen von Zieldaten**

Method and device for passive calculation of target data

Procédé et dispositif de détermination passive de données cibles

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.12.2011 Patentblatt 2011/51**

(73) Patentinhaber: **ATLAS Elektronik GmbH**
**28309 Bremen (DE)**

(72) Erfinder: **Steimel, Ulrich, Dr.**
**28876 Oyten (DE)**

(74) Vertreter: **Wasiljeff, Johannes M.B. et al**
**Jabbusch Siekmann & Wasiljeff**
**Patentanwälte**
**Otto-Lilienthal-Strasse 25**
**28199 Bremen (DE)**

(56) Entgegenhaltungen:
**EP-A2- 1 531 339     WO-A1-2009/156337**
**DE-A1- 3 446 658     DE-B3-102007 019 444**

**Beschreibung**

Die Erfindung betrifft ein Verfahren zum passiven Bestimmen von einem Ziel zugeordneten Zieldaten aus gemessenen und geschätzten Peilwinkeln der im Oberbebegriff des Anspruchs 1 genannten Art, eine Vorrichtung zum Ausführen des Verfahrens gemäß Anspruch 10 sowie ein Computerprogramm, welches zum Ausführen des Verfahrens über geeignete Programmcodemittel verfügt.

Um ohne Eigenverrat von einem Trägerfahrzeug, z.B. einem Oberflächenschiff oder U-Boot, Entfernung, Geschwindigkeit und Kurs eines Ziels, z.B. eines Oberflächenschiffs, U-Boots oder Torpedos als dem Ziel zugeordneten Zieldaten zu bestimmen, werden mit einer Sonar-Empfangsanlage Schallwellen des Zielgeräusches empfangen und Peilwinkel zum Ziel gemessen. Aus diesen Peilwinkeln wird in Abhängigkeit der Eigenposition des Trägerfahrzeugs eine Position des Ziels geschätzt und ein zugehöriger geschätzter Peilwinkel berechnet. Vorraussetzung dafür ist, dass sich das Ziel gleichförmig, d.h. unbeschleunigt auf konstantem Kurs, bewegt.

Aus DE 34 46 658 C2 ist ein Verfahren bekannt, welches iterativ die Differenz zwischen gemessenen und geschätzten Peilwinkeln über mehrere Verarbeitungszyklen solange verkleinert, bis eine Fehlergrenze unterschritten ist. Bei Unterschreiten dieser Fehlergrenze wird die zugrundeliegende geschätzte Position als Zielposition erkannt. Die zu dieser Zielposition zugehörigen Zieldaten sind also in Abhängigkeit des verwendeten Iterationsverfahrens nach einem vorbestimmten Optimierungskriterium optimiert. Sie gehören zu einer optimierten Lösung, welche während jedes Verarbeitungszyklus mit jeder neuen Peilwinkelmessung aktualisiert wird. Bei gleichmäßigen Bedingungen, insbesondere ohne Zielmanöver oder Änderung der Schallausbreitung wird die optimierte Lösung sich mit zunehmender Beobachtungsdauer immer weiter der tatsächlichen Lösung annähern, denn je nach verwendetem Optimierungsverfahren und aktuellem Szenarium konvergiert die jeweils als beste Lösung bestimmte Lösung, d.h. die optimierte Lösung früher oder später gegen die tatsächlich richtige Lösung.

Ein derartiges Verfahren, auch Target Motion Analysis (TMA) genannt, hat jedoch den Nachteil, dass aufgrund von unbekannten Störungen in den Empfangssignalen die berechnete Lösung unrealistisch sein kann. Das TMA-Verfahren schätzt bei sehr fehlerhaften Eingangsdaten manchmal unrealistische oder unlogische Zieldaten, wie bspw. eine Geschwindigkeit von 80 Knoten oder einen ablaufenden Kurs obwohl sich das Ziel auf einem anlaufenden Kurs befindet.

EP 1 531 339 A2 beschreibt ein Verfahren, bei dem Grenzwerte für die Zieldaten vorbestimmt werden, wodurch sich nur physikalisch und technisch sinnvolle Zieldaten aus dem iterativen Schätzprozess ergeben. Völlig unrealistische oder unlogische Ergebnisse, wie z.B. eine Entfernung von 1000 Kilometern, die bei stark verrauschten Empfangssignalen durchaus bei der Iteration auftreten können, werden von vornherein ausgeschlossen.

Ein derartiges Optimierungsverfahren, bei dem Grenzwerte für die Zieldaten beim Optimieren berücksichtigt werden, wird Constraint-TMA (CTMA) genannt. Die Grenzwerte werden bspw. von einem Bediener manuell eingegeben oder aber aus den geographischen Gegebenheiten ermittelt. Schon grobe Vorgaben ermöglichen, dass Schätzungen von Zielpositionen ausgeschlossen werden, die mit der Sonar-Empfangsanlage unmöglich erfasst werden können.

Das bekannte CTMA-Verfahren hat jedoch den Nachteil, dass deren optimierte Lösung bei falsch gewählten Grenzwerten nicht gegen die tatsächlich richtige Lösung konvergieren kann. Da die CTMA-Lösung dem globalen Minimum eines Optimierungskriteriums innerhalb der festgelegten Grenzwerte entspricht, liefert diese nicht die tatsächlich richtige Lösung, wenn sich die tatsächliche Lösung außerhalb des durch die Grenzwerte festgelegten Lösungsraumes befindet. Somit würde bei falsch gewählten Grenzwerten das einfache TMA-Verfahren nach einer Konvergenzphase genauere Ergebnisse liefern als das CTMA-Verfahren.

Der Erfindung liegt daher das Problem zugrunde, falsch gewählte Grenzwerte bei Verwendung eines Optimierungsverfahrens zum Bestimmen von Zieldaten zu erkennen und zu korrigieren.

Die Erfindung löst dieses Problem durch die Merkmale eines Verfahrens zum passiven Bestimmen von Zieldaten gemäß Anspruch 1 sowie mit einer Vorrichtung gemäß Anspruch 10.

Empfangssignale mindestens einer elektroakustischen und/oder optoakustischen Wandleranordnung, bspw. einer Hufeisenbasis oder Seitenantenne an Bord eines U-Bootes als Trägerfahrzeug und/oder einer von einem Oberflächenschiff oder einem U-Boot nachgeschleppten Schleppantenne werden in einer Sonar-Empfangsanlage richtungsselektiv zu Gruppensignalen zusammengefasst und die Pegel der Gruppensignale beobachtet. Eine Erhöhung des Pegels deutet darauf hin, dass ein Ziel auf einem Peilstrahl eines dem Gruppensignal zugeordneten Peilwinkel liegt.

Während der Fahrt des Trägerfahrzeugs auf einem Eigenleg längs seines Kurses werden fortlaufend Peilwinkel gemessen. Das Eigenleg bezeichnet dabei denjenigen Weg, den das Trägerfahrzeug während einer vorgegebenen Zeitdauer mit konstantem Kurs zurückgelegt hat. In aufeinanderfolgenden Verarbeitungszyklen werden die zum Ziel gemessenen Peilwinkel zu Zieldaten verarbeitet. Dabei wird je Verarbeitungszyklus wenigstens ein Zieldatum, insbesondere jedoch ein Satz von Zieldaten geschätzt, wie bspw. Zielentfernung, Zielkurs und/oder Zielgeschwindigkeit.

Als Optimierungsverfahren wird bevorzugt das CTMA-Verfahren angewandt, welches zum Bestimmen der Zieldaten zuvor festgelegte Grenzwerte berücksichtigt. Es handelt sich dabei um ein nicht rekursives Rechenverfahren, bei dem Peilwinkeldifferenzen aus den gemessenen und den geschätzten Peilwinkeln gebildet werden. Die Summe dieser etwaig gewichteten Peilwinkeldifferenzen oder der Quadrate dieser Differenzen wird dann iterativ minimiert. Bei Erreichen einer vorbestimmten Fehlergrenze, d.h. eines vorbestimmten Minimalwertes der Peilwinkeldifferenz wird die optimierte Lösung mittels Vektorkomponenten X0, Y0, VX, VY als beste Lösung angegeben. Aus den Positionskomponenten X0, Y0 und Geschwindigkeitskomponenten VX, VY lassen sich aktuelle Zieldaten für eine Zielentfernung, einen Zielkurs und/oder eine Zielgeschwindigkeit ermitteln. Die Erfindung ist jedoch nicht auf das CTMA-Verfahren beschränkt. Es sind auch andere Optimierungsverfahren denkbar, die aus geschätzten X-Y-Komponenten Positionen für das Ziel berechnen und Grenzwerte für die Zieldaten beim Optimieren berücksichtigen.

Um unrealistische oder unlogische Zieldaten, welche sich z.B. durch stark verrauschte Empfangssignale ergeben können, von vornherein ausschließen zu können, wird der Lösungsraum des CTMA-Verfahrens für die geschätzten Zieldaten sinnvoll eingeschränkt, indem Grenzwerte für die Zieldaten festgelegt werden. Dabei werden jedem Zieldatum jeweils ein maximaler und ein minimaler Grenzwert zugewiesen. Für eine Zielentfernung, einen Zielkurs und eine Zielgeschwindigkeit werden bspw. Grenzwerte für eine minimal und maximal mögliche Zielentfernung festgelegt, ein anlaufender oder ablaufender Kurs und Werte für eine minimal und maximal mögliche Zielgeschwindigkeit. Diese Werte sind abhängig von den technischen Vorgaben der Sonaranlage oder vom Ziel. So liegen z.B. der Grenzwert für die maximale Entfernung bei der maximalen Reichweite der Sonar-Empfangsanlage und der Grenzwert der maximalen Geschwindigkeit bspw. bei einer maximalen Geschwindigkeit von Schnellbooten oder Torpedos.

Von einem Bediener können diese Grenzwerte für die Zieldaten manuell eingegeben werden oder aber die Grenzwerte werden aus der angenommenen Reichweite des die Peilwinkel liefernden Sensors oder den geographischen Gegebenheiten ermittelt. Aus diesen vorgegebenen Grenzwerten werden Randbedingungen für Positionskomponenten und Geschwindigkeitskomponenten ermittelt, die dann dem Schätzen der Position des Ziels zugrunde gelegt werden. Dadurch werden nur physikalisch und technisch sinnvolle Daten über die Entfernung des Ziels, seine Geschwindigkeit und seinen Kurs in den iterativen Schätzprozess eingegeben.

Es ist jedoch möglich, die Grenzwerte zuvor falsch gewählt zu haben. Bspw. wird für den Kurs eines Ziels häufig angenommen, dass sich das Ziel bei seiner ersten Detektion auf einem anlaufenden Kurs befindet. Ein Ziel kann jedoch z.B. auf ablaufendem Kurs hinter einer Insel sein. Tritt dieses Ziel nun aus dem Inselschatten heraus, so ist es bei seiner ersten Detektion ablaufend. Dies führt dazu, dass die optimierte Lösung des CTMA-Verfahrens aufgrund zuvor festgelegter Grenzwerte nie gegen die tatsächlich richtige Lösung konvergieren kann, weil der Lösungsraum durch die Grenzwerte entsprechend eingeschränkt ist.

Zum Erkennen und Korrigieren fehlerhafter Grenzwerte wird vorteilhafterweise erfindungsgemäß eine Fehlerbehandlung durchgeführt. Die Fehlerbehandlung umfasst zunächst eine Plausibilitätsprüfung zum Erkennen fehlerhafter Grenzwerte. Nachfolgend erfolgt entweder ein Ermitteln der als richtig angenommenen Zieldaten aus der optimierten Lösung des CTMA-Verfahrens, für den Fall, dass kein fehlerhafter Grenzwert vorliegt oder aber es erfolgt ein Verändern eines, mehrerer oder aller Grenzwerte nach vorbestimmten Regeln mittels eines Korrekturmoduls sowie ein erneutes Durchführen des CTMA-Verfahrens und der Fehlerbehandlung unter Berücksichtigung der zuvor veränderten Grenzwerte zum Ermitteln neuer temporärer Zieldaten für den Fall, dass wenigstens ein fehlerhafter Grenzwert vorliegt. Der Vorteil des erfindungsgemäßen Verfahrens liegt darin, dass fehlerhaft gewählte Grenzwerte mittels der Fehlerbehandlung erkannt und korrigiert werden können.

In einer bevorzugten Ausführungsform der Erfindung weist das Verfahren zusätzliche Schritte auf. Mittels eines weiteren Optimierungsverfahrens, nachfolgend als TMA-Verfahren bezeichnet, wird eine optimierte TMA-Lösung bestimmt, aus der weitere temporäre Zieldaten für eine Zielentfernung, einen Zielkurs und/oder eine Zielgeschwindigkeit ermittelt werden. Dabei wird die geschätzte Position des Zieles, die dem von dem TMA-Verfahren ermitteltem Minimum zugrunde liegt, als optimierte TMA-Lösung bestimmt. Anschließend erfolgt eine Überprüfung, ob die temporären Zieldaten innerhalb eines von den Grenzwerten aufgespannten Lösungsraumes liegen. Dazu werden die ermittelten temporären Zieldaten mit zuvor festgelegten Grenzwerten verglichen. Dabei können die Grenzwerte manuell von einem Bediener eingegeben worden sein oder aus den geographischen Gegebenheiten ermittelt worden sein.

Die Erfindung hat erkannt, dass sobald das TMA-Verfahren eine Lösung ermittelt hat, welche innerhalb des von den vorbestimmten Grenzwerten aufgespannten Lösungsraumes liegt, diese TMA-Lösung der CTMA-Lösung entspricht. Das CTMA-Verfahren benötigt jedoch mehr Rechenleistung als das TMA-Verfahren. Daher ist es besonders vorteilhaft zunächst einen Vergleich der TMA-Lösung mit den Grenzwerten oder einer aus den Grenzwerten abgeleiteten Größe durchzuführen, um festzustellen, ob die Durchführung des CTMA-Verfahrens notwendig ist.

Zum Überprüfen, ob die TMA-Lösung, bzw. die temporären Zieldaten, innerhalb eines von den Grenzwerten aufgespannten Lösungsraumes liegen, wird ein Vergleich der ermittelten temporären Zieldaten mit den Grenzwerten durchgeführt. Falls kein temporäres Zieldatum außerhalb des von den Grenzwerten aufgespannten Lösungsraumes oder einer aus den Grenzwerten abgeleiteten Größe liegt, wird die TMA-Lösung und/oder die aus der TMA-Lösung ermittelten Zieldaten als richtig angenommene Zieldaten ausgegeben.

Liegt jedoch wenigstens ein temporäres Zieldatum außerhalb des von den Grenzwerten aufgespannten Lösungsraumes, wird das CTMA-Verfahren zum Schätzen der Position des Zieles ausgeführt, wobei das CTMA-Verfahren zuvor festgelegte Grenzwerte bei dem Schätzprozess berücksichtigt. Ferner wird die erfindungsgemäße Fehlerbehandlung zum Erkennen und Korrigieren fehlerhafter Grenzwerte durchgeführt.

EP 2 397 865 B1

In einer weiteren bevorzugten Ausführungsform der Erfindung wird ein Konvergenzzeitpunkt des TMA-Verfahrens ermittelt. Zu Trackbeginn befindet sich das Optimierungsverfahren in einer Pre-Konvergenzphase und nach dem Konvergenzzeitpunkt in einer Post-Konvergenzphase. Die Pre-Konvergenzphase zeichnet sich dadurch aus, dass bei fehlerhaften Eingangsdaten unterschiedliche Lösungen je Verarbeitungszyklus ermittelt werden, welche jedoch gleich wahrscheinlich sind. So schwankt die TMA-Lösung bspw. zwischen einem anlaufenden und einem ablaufenden Kurs des Ziels bis der Konvergenzzeitpunkt erreicht ist und sich eine stabile Lösung einstellt. In dieser Phase ist es schwer, falsch gewählte Grenzwerte zu erkennen. Daher wird vorteilhafterweise erst nach Erreichen des Konvergenzzeitpunktes die Fehlerbehandlung zum Erkennen und Korrigieren fehlerhafter Grenzwerte ausgeführt.

Die Erfindung hat jedoch erkannt, dass der Bediener oft Zusatzinformationen über das Ziel besitzt. Daher wird, für den Fall, dass das CTMA-Verfahren ausgeführt wird, die Lösung des CTMA-Verfahrens und/oder die aus der CTMA-Lösung ermittelten temporären Zieldaten innerhalb der Pre-Konvergenzphase bzw. vor dem Erreichen des Konvergenzzeitpunktes ohne vorherige Fehlerbehandlung ausgegeben.

Bevorzugt wird der Konvergenzzeitpunkt mittels eines Konvergenzphasendetektors anhand eines Wertes für einen Vertrauensbereich (range of confidence - ROC) des TMA-Verfahrens ermittelt. Dieser Wert wird aus den vergangenen Schätzungen der vergangenen Verarbeitungszyklen des TMA-Verfahrens berechnet. Vorzugsweise wird der ROC-Wert aus der Standardabweichung der Zielentfernung unter Berücksichtigung der geschätzten Zielposition und der Eigenposition ermittelt. Anschließend wird dieser ROC-Wert mit einem vorbestimmten Schwellenwert verglichen. Erreicht der ROC-Wert diesen Schwellenwert, wird mittels des Konvergenzphasendetektors der Konvergenzzeitpunkt festlegt. Zu Trackbeginn bezeichnet ein hoher ROC-Wert eine instabile Lösung. Nach einer Mehrzahl von Verarbeitungszyklen des TMA-Verfahrens ändert sich die Lösung kaum noch und ein geringer ROC-Wert initiiert die Post-Konvergenzphase.

Gemäß einer weiteren Ausführungsform der Erfindung ist es besonders vorteilhaft, dem Bediener die CTMA-Lösung zusammen mit den zuvor festgelegten Grenzwerten bis zum Erreichen des Konvergenzzeitpunktes visuell auszugeben. Um die Zusatzinformationen, die der Bediener möglicherweise über das Ziel besitzt, ausnutzen zu können, wird die CTMA-Lösung graphisch derart aufbereitet, dass der Bediener erkennen kann, ob die Lösung auf fehlerhaft gewählte Grenzwerte zurückzuführen ist. Die Ausgabe kann bspw. in numerischer Form erfolgen, bei der die kritischen Werte in einer Tabelle bspw. farbig markiert werden. Ebenso ist eine graphische Ausgabe, insbesondere ein Plan-Position-Indicator (PPI) - Plot, der Zieldaten denkbar, bei der auch die Grenzwerte dargestellt werden. In diesem Fall ist es besonders vorteilhaft, wenn fehlerhafte Grenzwerte mittels einer Eingabeeinrichtung manuell auch innerhalb eines Verarbeitungszyklus verändert werden können.

In einer weiteren Ausführungsform der Erfindung werden für die Plausibilitätsprüfung zum Erkennen fehlerhafter Grenzwerte eine Residuenprüfung und/oder eine Kantenprüfung durchgeführt. Das CTMA-Verfahren liefert eine Lösung, die innerhalb der vorgegeben Grenzwerte liegt. Das ist diejenige Lösung, die dem globalen Minimum innerhalb des von den Grenzwerten aufgespannten Lösungsraumes entspricht. Stimmt die CTMA-Lösung nicht mit den tatsächlichen Zieldaten überein, weil die Grenzwerte falsch gewählt wurden, lässt sich das vorteilhaft mittels der Residuenprüfung und/oder der Kantenprüfung feststellen.

Gemäß einer weiteren vorteilhaften Ausführungsform der Erfindung wird für die Residuenprüfung ein Residuenfaktor ermittelt. Bei Verwendung von wenigstens zwei Optimierungsverfahren, insbesondere des TMA-Verfahrens und des CTMA-Verfahrens, wird der Residuenfaktor aus den jeweiligen Lösungen der Optimierungsverfahren ermittelt. Dieser wird aus der Summe der - vorteilhaft gewichteten - Quadrate der Differenzen für die geschätzten Peilwinkel und für die zugeordneten gemessenen Peilwinkel berechnet und anschließend mit wenigstens einem vorbestimmten Schwellenwert verglichen. Erreicht oder überschreitet der Residuenfaktor den maximalen Schwellenwert, erkennt die Plausibilitätsprüfung einen fehlerhaften Grenzwert. Ferner erkennt die Plausibilitätsprüfung einen fehlerhaften Grenzwert, wenn in mehreren aufeinanderfolgenden Verarbeitungszyklen des Optimierungsverfahrens weitere vorbestimmte Schwellenwerte, vorzugsweise geringere als der erste Schwellenwert, erreicht bzw. überschritten werden.

Gemäß einer weiteren vorteilhaften Ausführungsform der Erfindung werden für die Kantenprüfung die Grenzwerte und/oder eine aus den Grenzwerten abgeleiteten Größe, insbesondere Zustandsgrenzwerte, mit der CTMA-Lösung verglichen. Die Grenzwerte für die Zielentfernung, den Zielkurs und die Zielgeschwindigkeit werden jeweils als Minimalwert und Maximalwert festgelegt und in Zustandsgrenzwerte in einen Zustandsvektor p=[X0, Y0, VX, VY] konvertiert. Dabei bezeichnen X0, Y0 die Zielposition bei Trackbeginn und VX, VY die Geschwindigkeitskomponenten des Ziels.

Diese Zustandsgrenzwerte lassen sich wiederum in reale effektive Grenzwerte für Zielentfernung, Zielkurs und Zielgeschwindigkeit rückkonvertieren, wobei die realen effektiven Grenzwerte üblicherweise schwächer sind als die festgelegten bzw. eingegebenen Grenzwerte.

Bei der Kantenprüfung werden sowohl die Grenzwerte als auch die daraus abgeleiteten Zustandsgrenzwerte mit der Lösung mindestens eines Optimierungsverfahrens verglichen, um festzustellen, ob die Zieldaten der Lösung innerhalb dieses von den Grenzwerten aufgespannten Lösungsraumes oder auf deren "Kante" liegen. Die Prüfung von Grenzwerten und daraus abgeleiteten Zustandsgrenzwerten erhöht vorteilhafterweise die Zuverlässigkeit dieses Kan-

4

tenprüfverfahrens.

Ferner werden bei der Kantenprüfung nicht nur die aktuellen Lösungen des Optimierungsverfahrens berücksichtigt, sondern ebenso Lösungen aus vorangegangenen Verarbeitungszyklen.

In einer weiteren Ausführungsform der Erfindung werden zum Korrigieren fehlerhafter Grenzwerte mittels des Korrekturmoduls bei Erkennung entweder wenigstens eines fehlerhaften Grenzwertes oder wenigstens eines bereits veränderten, fehlerhaften Grenzwertes, ein, mehrere oder alle Grenzwerte verändert und/oder wenigstens ein den Grenzwert aufweisendes, zugehöriges Grenzwert-Intervall verändert und das CTMA-Verfahren und die Fehlerbehandlung im aktuellen Verarbeitungszyklus erneut durchgeführt unter Berücksichtigung der veränderten Grenzwerte. Dies wird jeweils bei erneutem Erkennen wenigstens eines fehlerhaften, veränderten Grenzwertes mehrmals im aktuellen Verarbeitungszyklus wiederholt. Dazu wird bevorzugt eine Zählvariable eingesetzt, welche die Anzahl der aufeinanderfolgenden Durchläufe des CTMA-Verfahrens und der Fehlerbehandlung ermittelt. Erreicht die Zählvariable einen vorbestimmten Schwellenwert, werden das CTMA-Verfahren und die Fehlerbehandlung im aktuellen Verarbeitungszyklus mit vorbestimmten Minimalgrenzwerten durchgeführt. Oder aber das Verfahren zum Bestimmen von Zieldaten wird mit der nächsten Peilwinkelmessung in einem neuen Verarbeitungszyklus gestartet.

Ob das Verfahren zum Bestimmen von Zieldaten in einem neuen Verarbeitungszyklus gestartet wird oder die Fehlerbehandlung im aktuellen Verarbeitungszyklus mit Minimalgrenzwerten durchgeführt wird, wird bevorzugt mittels des zuvor ermittelten Residuenfaktors festgelegt. Überschreitet der Residuenfaktor einen zuvor festgelegten Schwellenwert, ist dies ein Hinweis auf ganz falsch gewählte Grenzwerte und die Fehlerbehandlung wird unter Berücksichtigung der Minimalgrenzwerten im aktuellen Verarbeitungszyklus erneut ausgeführt. Bei einem geringen Residuenfaktor wird das Verfahren zum Bestimmen von Zieldaten jedoch in einem neuen Verarbeitungszyklus mit der nächsten Peilwinkelmessung gestartet.

In einer weiteren Ausführungsform der Erfindung wird ein evtl. Zielmanöver bei der Durchführung des Optimierungsverfahrens, insbesondere des CTMA-Verfahrens, berücksichtigt. Dazu wird ein Zielmanöverzeitpunkt ermittelt, zu dem das Optimierungsverfahren mit der Berechnung eines neuen Ziellegs beginnt. Ein Leg bezeichnet dabei einen Weg oder eine Etappe, die während einer vorgegebenen Zeitdauer mit konstantem Kurs und konstanter Geschwindigkeit zurückgelegt wird.

Für die Berechnung des ursprünglichen Ziellegs verwendet das Optimierungsverfahren die ursprünglich festgelegten Grenzwerte und für die Berechnung des neuen Ziellegs werden neue Grenzwerte festgelegt. Dadurch werden vorteilhafterweise Kurs- und/oder Geschwindigkeitsänderungen des Ziels bei der Berechnung des Optimierungsverfahrens berücksichtigt. Insbesondere wird auch eine geschätzte Endposition des ursprünglichen Ziellegs verwendet, um daraus Grenzwerte für eine Entfernung für den Start des neuen Ziellegs abzuleiten.

Eine alternative Ausführungsform der Erfindung betrifft ein Computerprogramm, insbesondere ein Computerprogrammprodukt, welches Programmcodemittel aufweist zum Ausführen des erfindungsgemäßen Verfahrens, wenn das Programm auf einem Computer oder einer entsprechenden Recheneinheit ausgeführt wird. Die Programmcodemittel sind auf von einem Computer lesbaren Datenträgern speicherbar, wobei geeignete Datenträger bspw. Disketten, Festplatten, Flash-Speicher, EPROMs, CDs, DVDs und anderes mehr sein können. Auch ein Download eines Programms über Computernetze, insbesondere Internet, Intranet usw., ist möglich.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:

Fig. 1     eine schematische Darstellung des Verfahrensablaufs entsprechend dem erfindungsgemäßen Verfahren,

Fig. 2     eine schematische Darstellung des Verfahrensablaufs mit zusätzlichen Verfahrenskomponenten gemäß einem Ausführungsbeispiel der Erfindung,

Fig. 3     eine schematische Funktionsübersicht der Fehlerbehandlungseinrichtung gemäß einem Ausführungsbeispiel der Erfindung,

Fig. 4     eine schematische Funktionsübersicht des Plausibilitätsprüfmoduls gemäß einem Ausführungsbeispiel der Erfindung,

Fig. 5     eine schematische Funktionsübersicht des Korrekturmoduls gemäß einem Ausführungsbeispiel der Erfindung,

Fig. 6     eine schematische Darstellung einer Erweiterung des Ausführungsbeispiels gemäß Fig. 2 mit einem Konvergenzphasendetektor.

Bei vorzugsweise konstanter Fahrt eines Wasserfahrzeugs längs seines Eigenlegs werden von diesem Wasserfahrzeug aus Peilwinkel zu einem Ziel gemessen, während sich das Ziel angenommenerweise mit konstanter Geschwindigkeit und konstantem Kurs von einer ersten Zielposition zu einer zweiten Zielposition bewegt.

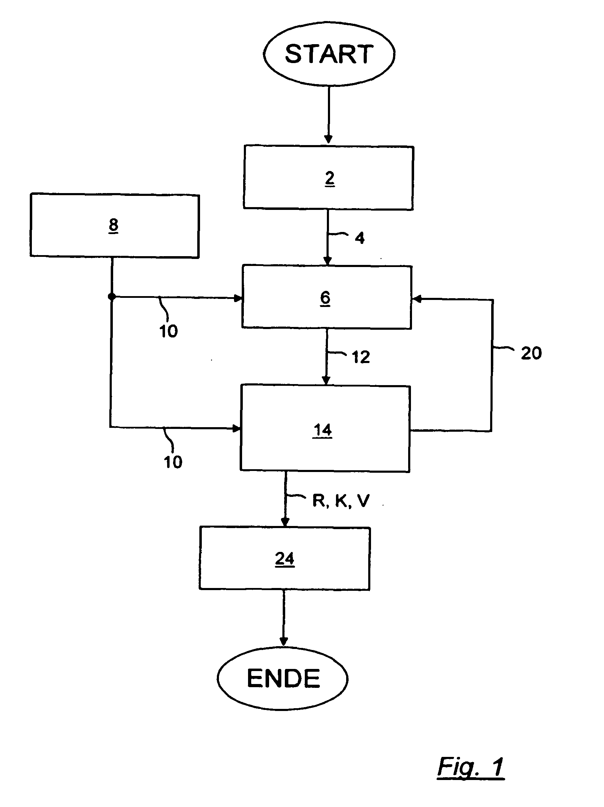

Die Ermittlung der Peilwinkel erfolgt in aufeinanderfolgenden Verarbeitungszyklen in Abhängigkeit der Eigenposition des Wasserfahrzeugs. Aus diesen Peilwinkeln wird eine Position des Zieles geschätzt und ein zugehöriger geschätzter Peilwinkel berechnet. Mittels eines Optimierungsverfahrens wird iterativ die Summe der Quadrate der Differenzen zwischen gemessenen und geschätzten Peilwinkeln über mehrere Verarbeitungszyklen solange verkleinert, bis eine vorbestimmte Fehlergrenze unterschritten ist. Aus der dem Minimum zugrunde liegenden, geschätzten Position des Zieles wird eine optimierte Lösung des Optimierungsverfahrens bestimmt. Während jedem Verarbeitungszyklus werden aus dieser optimierten Lösung Zieldaten, insbesondere eine Zielentfernung R, ein Zielkurs K und/oder eine Zielgeschwindigkeit V ermittelt. Das erfindungsgemäße Verfahren zum passiven Bestimmen von einem Ziel zugeordneten Zieldaten wird anhand von Fig. 1 näher erläutert.

Fig. 1 zeigt eine schematische Darstellung des Verfahrensablaufes entsprechend dem erfindungsgemäßen Verfahren. Mittels einer Sonar-Empfangsanlage 2 werden durch richtungsselektiven Empfang von Schallwellen, die vom Ziel abgestrahlt oder gesendet werden, Peilwinkel 4 zum Ziel gemessen. In einer Berechnungseinheit erfolgt die Berechnung temporärer Zieldaten mittels eines Optimierungsverfahrens 6, nachfolgend als CTMA-Verfahren bezeichnet. Es werden Peilwinkeldifferenzen gebildet aus geschätzten Peilwinkeln, die aus geschätzten Positionen des Ziels ermittelt werden, und gemessenen Peilwinkeln, welche iterativ minimiert werden. Diese Methode der kleinsten Fehlerquadrate ist jedoch nur ein mögliches Verfahren zur Bestimmung der Zieldaten; weitere Verfahren sind ebenfalls denkbar.

Da üblicherweise weitere Informationen über das Ziel bekannt sind, wie bspw. dass das Ziel an- oder ablaufend ist und/oder die Zielgeschwindigkeit zwischen einem unteren und einem oberen Grenzwert, bspw. zwischen 5 und 20 Knoten liegt, ist es vorteilhaft, diese Informationen dem CTMA-Verfahren 6 zum Bestimmen der Zieldaten bereitzustellen.

Zu diesem Zweck weist das erfindungsgemäße Verfahren eine Eingabeeinrichtung 8 für Grenzwerte 10 auf, mit der bspw. Grenzwerte für eine minimale und eine maximale Zielentfernung ($inpR_{min}$, $inpR_{max}$), einen Zielkurs zwischen 0° und 360° ($inpK_{min}$, $inpK_{max}$) und eine minimale und eine maximale Zielgeschwindigkeit ($inpV_{min}$, $inpV_{max}$) manuell von einem Bediener eingegeben oder aus den geographischen Gegebenheiten ermittelt werden können. Dadurch wird der Lösungsraum für die zu bestimmenden Zieldaten R, K, V sinnvoll eingeschränkt.

Die nachfolgenden Erläuterungen beziehen sich auf eine Anwendung des Eingangs aufgeführten CTMA-Verfahrens als angewandtes Optimierungsverfahren 6. Sie sind jedoch auch auf andere Optimierungsverfahren übertragbar, welche zum Schätzen der zu bestimmenden Zieldaten R, K, V, vorbestimmte, festgelegte Grenzwerte 10 berücksichtigen.

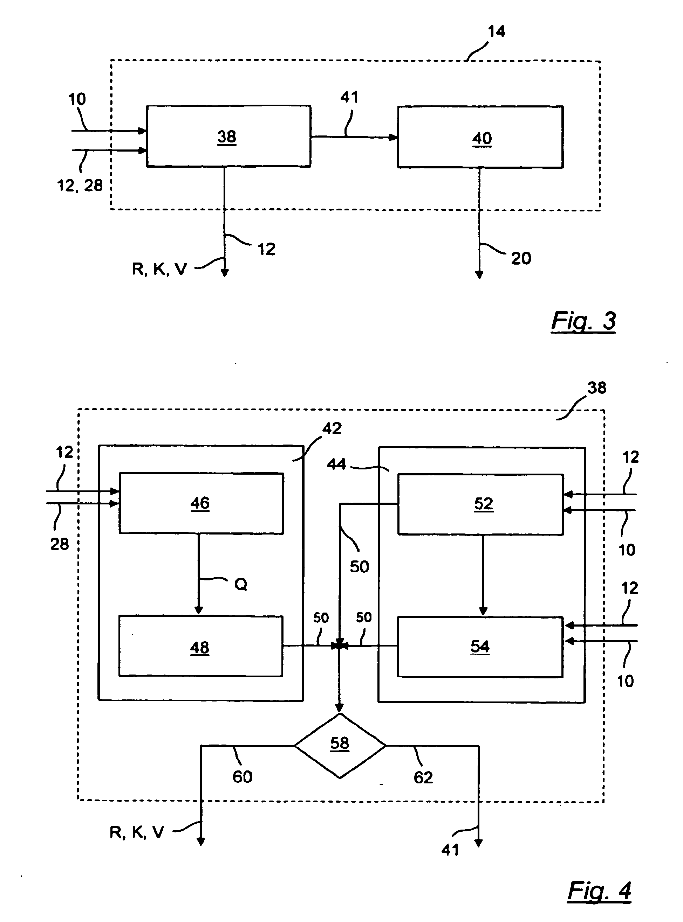

Da die Grenzwerte 10 der Eingabeeinrichtung 8 auch falsch gewählt sein können, wird die in jedem Verarbeitungszyklus ermittelte CTMA-Lösung 12 des CTMA-Verfahrens 6 einer Fehlerbehandlungseinrichtung 14 zum Erkennen und Korrigieren falsch gewählter Grenzwerte 10 übergeben. Diese Fehlerbehandlungseinrichtung 14, welche anhand von Fig. 3 nachfolgend näher erläutert wird, entscheidet, ob wenigstens ein fehlerhafter Grenzwert 10 vorliegt oder nicht.

Bei Vorliegen wenigstens eines fehlerhaften Grenzwertes 10 werden ein, mehrere oder alle Grenzwerte 10 nach vorbestimmten Regeln innerhalb der Fehlerbehandlungseinrichtung 14 verändert und als neue Grenzwerte 20 dem CTMA-Verfahren 6 übergeben. Dieses ermittelt erneut eine CTMA-Lösung 12 im aktuellen Verarbeitungszyklus.

Bei Vorliegen keines fehlerhaften Grenzwertes 10 werden aus der CTMA-Lösung 12 die als richtig angenommenen Zieldaten R, K, V ermittelt und zur Datenausgabe und/oder Datenverarbeitung einer Ausgabeeinrichtung 24 übergeben, wobei die Ausgabeeinrichtung 24 ein Anzeigegerät, insbesondere ein Plotter, ein Drucker oder Bildschirm, zur visuellen Darstellung der zu bestimmenden Zieldaten R, K, V oder aber auch eine Einrichtung zur Bereitstellung der Zieldaten R, K, V für eine evtl. nachfolgende Signalverarbeitungseinrichtung sein kann.

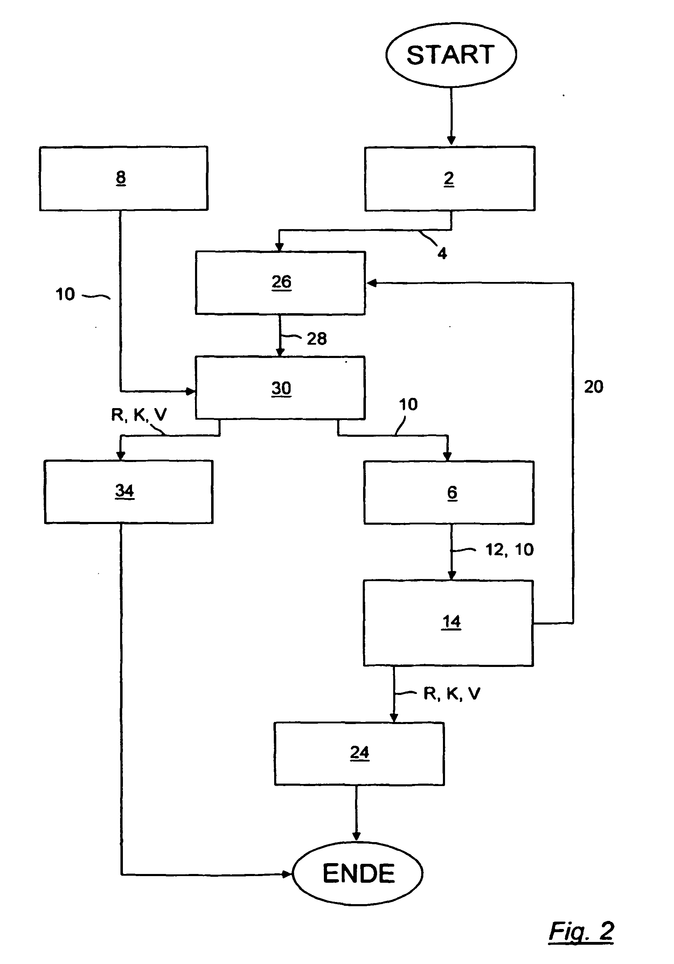

Fig. 2 zeigt ein weiteres Ausführungsbeispiel, bei dem das vorgehend beschriebene Verfahren durch zusätzliche Verfahrenskomponenten ergänzt wird. Gleiche Bezugsziffern bezeichnen dabei gleiche funktionale Einheiten, so dass entsprechend auf vorstehende Ausführungen verwiesen wird.

Gemäß dem Ausführungsbeispiel von Fig. 2 weist das Verfahren zum Bestimmen von Zieldaten zwei Berechnungseinheiten zum Durchführen von zwei separaten Optimierungsverfahren auf. Vorzugsweise beinhaltet eine erste Berechnungseinheit das einfache TMA-Verfahren 26 zum Schätzen erster temporärer Zieldaten $R_{TMA}$, $K_{TMA}$, $V_{TMA}$ und eine zweite Berechnungseinheit das CTMA-Verfahren 6 zum Schätzen weiterer temporärer Zieldaten R, K, V.

Liegen die temporären Zieldaten $R_{TMA}$, $K_{TMA}$, $V_{TMA}$, die sich aus der TMA-Lösung 28 ergeben, innerhalb eines durch die vorbestimmten Grenzwerte 10 eingeschränkten Lösungsraumes, so würde die TMA-Lösung 28 der CTMA-Lösung 12 entsprechen.

In dem Ausführungsbeispiel der Erfindung gemäß Fig. 2 wird die ermittelte TMA-Lösung 28 des TMA-Verfahrens 26 zunächst einer Kontrolleinrichtung 30 übergeben. In der Kontrolleinrichtung 30 erfolgt ein Vergleich der aus der TMA-Lösung 28 ermittelten temporären Zieldaten $R_{TMA}$, $K_{TMA}$, $V_{TMA}$ mit den zuvor festgelegten Grenzwerten 10. Liegen die temporären Zieldaten $R_{TMA}$, $K_{TMA}$, $V_{TMA}$ innerhalb des durch die Grenzwerte 10 aufgespannten Lösungsraumes, werden die TMA-Lösung 28 und/oder die aus dieser TMA-Lösung 28 ermittelten temporären Zieldaten $R_{TMA}$, $K_{TMA}$, $V_{TMA}$ zur Datenausgabe und/oder Datenverarbeitung einer Ausgabeeinheit 34 als die als richtig angenommenen Zieldaten R, K, V übergeben. Die Ausgabeeinheit 34 kann bspw. ein Plotter, Bildschirm oder ähnliches zur visuellen Darstellung der Zieldaten R, K, V sein. Ferner ist es denkbar, die Zieldaten R, K, V mittels der Ausgabeeinrichtung 34 einer weiteren Signalverarbeitung zur Verfügung zu stellen.

Liegt jedoch mindestens ein temporäres Zieldatum $R_{TMA}$, $K_{TMA}$ und/oder $V_{TMA}$ der TMA-Lösung 28 des TMA-Verfahrens 26 außerhalb des durch die Grenzwerte 10 eingeschränkten Lösungsraumes, wird das CTMA-Verfahren 6 nebst anschließender Fehlerbehandlung 14, wie anhand von Fig. 1 vorstehend erläutert, durchgeführt.

Bei dem obigen Ausführungsbeispiel gemäß Fig. 1 werden jedoch für den Fall, dass die Fehlerbehandlung 14 wenigstens einen fehlerhaften Grenzwert 10 erkannt hat, die veränderten Grenzwerte 20 dem CTMA-Verfahren 6 übergeben. Bei dem in Fig. 2 gezeigten Ausführungsbeispiel werden die veränderten Grenzwerte 20 für den Fall, dass die Fehlerbehandlung 14 wenigstens einen fehlerhaften Grenzwert 10 erkannt hat, dem TMA-Verfahren 26 übergeben. Dies hat den Vorteil, dass bei korrekt veränderten Grenzwerten 20 die TMA-Lösung 28 und/oder die daraus ermittelten, als richtig angenommenen Zieldaten R, K, V ausgegeben werden können und das CTMA-Verfahren 6 nebst der Fehlerbehandlung 14 im aktuellen Verarbeitungszyklus nicht erneut ausgeführt werden braucht.

Fig. 3 zeigt eine Funktionsübersicht der Fehlerbehandlungseinrichtung 14 zum Erkennen und Korrigieren fehlerhafter Grenzwerte 10. Die Fehlerbehandlungseinheit 14 erhält sowohl die Grenzwerte 10 als auch die Lösungen zweier Optimierungsverfahren. In diesem Ausführungsbeispiel werden der Fehlerbehandlungseinrichtung 14 die TMA-Lösung 28 des TMA-Verfahrens 26 sowie die CTMA-Lösung 12 des CTMA-Verfahrens 6 übergeben. Die Grenzwerte 10 werden innerhalb eines Plausibilitätsprüfmoduls 38 auf evtl. Fehler hin überprüft. Die Funktionsweise des Plausibilitätsprüfmoduls 38 wird anhand von Fig. 4 nachfolgend näher erläutert.

Falls kein fehlerhafter Grenzwert 10 mittels des Plausibilitätsprüfmoduls 38 erkannt wird, wird die CTMA-Lösung 12 des CTMA-Verfahrens 6 ausgegeben und/oder die aus dieser CTMA-Lösung 12 ermittelten, als richtig angenommenen Zieldaten R, K, V ausgegeben.

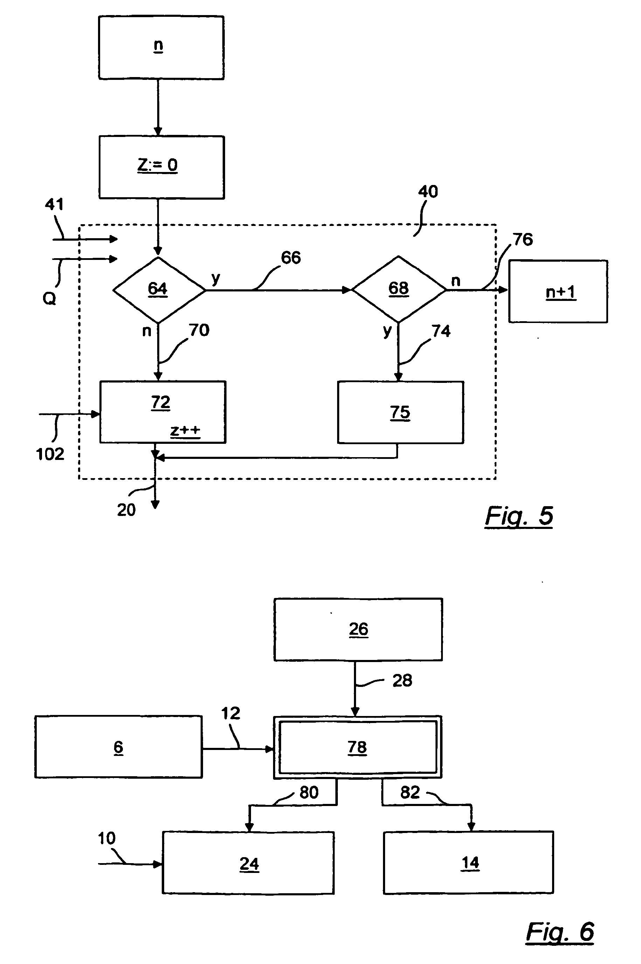

Für den Fall, dass wenigstens ein fehlerhafter Grenzwert 10 mittels des Plausibilitätsprüfmoduls 38 erkannt wird, wird einem Korrekturmodul 40 ein entsprechendes Fehlersignal 41 übergeben, woraufhin das Korrekturmodul 40 einen, mehrere oder alle Grenzwerte 10 nach vorbestimmten Regeln verändert. Die Funktionsweise des Korrekturmoduls 40 wird anhand von Fig. 5 nachfolgend näher erläutert.

Die mittels des Korrekturmoduls 40 veränderten Grenzwerte 20 werden ausgegeben und stehen somit dem weiteren Verfahrensablauf zur Verfügung.

Fig. 4 zeigt eine Funktionsübersicht des Plausibilitätsprüfmoduls 38, welches ein Residuenprüfmodul 42 und ein Kantenprüfmodul 44 für die Erkennung fehlerhafter Grenzwerte 10 aufweist.

Das Residuenprüfmodul 42 erhält fortlaufend die CTMA-Lösungen 12 des CTMA-Verfahrens 6 sowie die TMA-Lösungen 28 des TMA-Verfahrens 26 aus denen mittels einer Residuenfaktorberechnungseinheit 46 ein Residuenfaktor Q für jeden Verarbeitungszyklus ermittelt wird. Der Residuenfaktor Q wird als Quotient aus der Summe der absoluten Residuen ermittelt:

$$Q = \sum |\text{CTMA} - \text{Residuen}| / \sum |\text{TMA} - \text{Residuen}|$$

Der Residuenfaktor Q wird nachfolgend einer Vergleichseinheit 48 übergeben, in der der Residuenfaktor Q mit wenigstens einem vorgegebenen Schwellenwert pro Verarbeitungszyklus verglichen wird. Dabei gibt die Vergleichseinheit 48 ein positives Fehlersignal 50 aus, wenn der Residuenfaktor Q einen ersten Schwellenwert überschritten hat und/oder wenn der Residuenfaktor Q in zwei aufeinanderfolgenden Verarbeitungszyklen einen zweiten Schwellenwert überschritten hat, der geringer ist als der erste Schwellenwert und/oder wenn der Residuenfaktor Q in drei aufeinanderfolgenden Verarbeitungszyklen einen dritten Schwellenwert, der geringer als der zweite Schwellenwert ist, überschritten hat. Die Erfindung ist jedoch nicht auf einen Vergleich mit drei vorbestimmten Schwellenwerten begrenzt. Vielmehr sind beliebige Kombinationen von Schwellenwertvergleichen und aufeinanderfolgenden Verarbeitungszyklen mittels der Vergleicheinheit 48 als offenbart anzusehen.

Ferner weist das Plausibilitätsprüfmodul 38 ein Kantenprüfmodul 44 zum Ermitteln von fehlerhaft gewählten Grenzwerten 10 auf. Bei einer ersten Kantenprüfung 52 wird überprüft, ob wenigstens ein aus der CTMA-Lösung 12 ermitteltes temporäres Zieldatum R, K und/oder V, wie bspw. Zielentfernung, Zielkurs und/oder Zielgeschwindigkeit, auf der Kante oder außerhalb des durch die Grenzwerte 10 aufgespannten Lösungsraumes liegt. Bei falsch gewählten Grenzwerten 10 ist dies nämlich oftmals der Fall. Beträgt bspw. die wahre Zielgeschwindigkeit 10 Knoten, wird die geschätzte Zielgeschwindigkeit bei einer Geschwindigkeitsgrenzwertfestlegung von 2 bis 8 Knoten mit 8 Knoten angegeben. Hier liegt wenigstens ein geschätztes Zieldatum auf der Kante mindestens eines Grenzwertes 10 und die erste Kantenprüfung 52 gibt ein positives Fehlersignal 50 aus.

Um eine größere Zuverlässigkeit bei der Ermittlung von fehlerhaft gewählten Grenzwerten 10 zu erzielen, werden die aus der CTMA-Lösung 12 des CTMA-Verfahrens 6 ermittelten, temporären Zieldaten R, K, V ebenfalls mit einer aus den Grenzwerten 10 abgeleiteten Größe, insbesondere den Zustandsgrenzwerten, verglichen. Somit wird bevorzugt eine zweite Kantenprüfung 54 auf der Grundalge des Zustandsvektors p=[X0, Y0, VX, VY] durchgeführt. Es werden die Grenzwerte 10 zunächst in Zustandsgrenzwerte und dann in schwächere reale effektive Grenzwerte konvertiert, um diese mit den aus der CTMA-Lösung 12 ermittelten temporären Zieldaten R, K, V zu vergleichen. Liegt wenigstens ein temporäres Zieldatum R, K und/oder V außerhalb oder auf der Kante des durch die realen effektiven Grenzwerte aufgespannten Lösungsraumes, gibt die zweite Kantenprüfung 54 ein positives Fehlersignal 50 aus.

Ferner werden bei einer besonderen Ausführung bei der ersten Kantenprüfung 52 und/oder bei der zweiten Kantenprüfung 54 nicht nur die temporären Zieldaten R, K, V aus dem aktuellen Verarbeitungszyklus verglichen, sondern es wird auch die Historie der temporären Zieldaten R, K, V bei der Fehlererkennung berücksichtigt. Um die Möglichkeit einer Fehlentscheidung des Kantenprüfmoduls 44 zu verringern, wird somit ein positives Fehlersignal 50 nur ausgegeben, wenn in mehreren aufeinanderfolgenden Verarbeitungszyklen des CTMA-Verfahrens 6 die aus der CTMA-Lösung 12 ermittelten temporären Zieldaten R, K, V auf der Kante des durch die Grenzwerte 10 aufgespannten Lösungsraumes oder einer aus diesen Grenzwerten 10 abgeleiteten Größe liegen.

Die positiven Fehlersignale 50 der Vergleichseinheit 48, der ersten Kantenprüfung 52 und der zweiten Kantenprüfung 54 laufen in einem Entscheidungsblock 58 zusammen. Für den Fall, dass das Plausibilitätsprüfmodul 38 keinen fehlerhaften Grenzwert 10 erkannt hat, d.h. dass von der Vergleichseinheit 48, der ersten Kantenprüfung 52 und der zweiten Kantenprüfung 54 jeweils kein positives Fehlersignal 50 ausgegeben wird, werden über den Zweig 60 die temporären Zieldaten R, K, V als die als richtig angenommenen Zieldaten R, K, V des CTMA-Verfahrens 6 ausgegeben, um sie über eine Ausgabeeinheit 24 einem Bediener anzuzeigen.

Für den Fall, dass jedoch das Plausibilitätsprüfmodul 38 wenigstens einen fehlerhaften Grenzwert 10 erkannt hat, d.h. dass die Vergleichseinheit 48 und/oder die erste Kantenprüfung 52 und/oder die zweite Kantenprüfung 54 ein positives Fehlersignal 50 erzeugt haben, wird über den Zweig 62 ein Fehlersignal 41 an das Korrekturmodul 40 zum Korrigieren der Grenzwerte 10 ausgegeben.

Fig. 5 zeigt eine Funktionsübersicht des Korrekturmoduls 40 zum Korrigieren fehlerhafter Grenzwerte 10. Bei einer ersten Fehlererkennung 41 des Plausibilitätsmoduls 38 im aktuellen Verarbeitungszyklus n wird eine Zählvariable z initialisiert. Bevorzugt wird die Zählvariable z mit dem Wert 0 vorbelegt. Innerhalb des Korrekturmoduls 40 erfolgt in einem Entscheidungsblock 64 eine Abfrage, ob die Zählvariable z einen vorbestimmten Wert, bspw. den Wert 3, erreicht hat.

Bei einer positiven Entscheidung des Entscheidungsblocks 64, d.h. die Zählvariable hat den Wert 3 erreicht, wird über einen Zweig 66 ein weiterer Entscheidungsblock 68 angesteuert, welcher eine Abfrage tätigt, ob der von dem Plausibilitätsprüfmodul 38 ermittelte Residuenfaktor Q kleiner oder größer eines vorbestimmten Schwellenwertes ist.

Bei einer negativen Entscheidung des Entscheidungsblocks 64, d.h. die Zählvariable z ist kleiner als 3, wird über einen Zweig 70 eine Modifikationseinheit 72 zum Verändern der Grenzwerte 10 aktiviert.

Es werden nur die Grenzwerte 10 verändert, dessen zugehöriges Zieldatum R, K und/oder V von dem Plausibilitätsmodul 38 als auf der Kante oder außerhalb des durch den Grenzwert 10 aufgespannten Lösungsraumes liegend detektiert wurde. Liegt bspw. von den geschätzten Zieldaten nur die Zielentfernung R auf der Kante eines zuvor festgelegten Grenzwert-Intervalls [$inpR_{min}$, $inPR_{max}$] für die Zielentfernung, so werden auch nur die Grenzwerte $inpR_{min}$ und $inpR_{max}$ für die Zielentfernung mittels der Modifikationseinheit 72 verändert.

Das Verändern der Grenzwerte 10 erfolgt in kleinen Schritten innerhalb der vorbestimmten Minimalgrenzwerte wobei die Minimalgrenzwerte bspw. eine ,Zielentfernung von $inpR_{min}=0,1$ bis $inpR_{max}=100$ Kilometer, eine Zielgeschwindigkeit von $inpV_{min}=0,1$ bis $inpV_{max}=15$ Meter pro Sekunde und ein Zielkurs von $inpK_{min}=0$ bis $inpK_{max}=360$ Grad sein können. Liegt bspw. die geschätzte Zielentfernung der CTMA- Lösung 12 auf der Kante, so wird das Grenzwert-Intervall für die Zielentfernung [$inpR_{min}$, $inpR_{max}$] derart verschoben, dass die geschätzte Zielentfernung anschließend annähernd in der Mitte des verschobenen Grenzwert-Intervalls liegt.

Die veränderten Grenzwerte werden dann als neue veränderte Grenzwerte 20 dem CTMA-Verfahren 6 erneut in dem aktuellen Verarbeitungszyklus n zugeführt. Zusätzlich wird die Zählvariable z um einen Wert erhöht. Dadurch können die Grenzwerte 10 pro Verarbeitungszyklus nicht beliebig oft verändert werden. Erreicht die Zählvariable z bspw. den Wert 3, wird zu dem Entscheidungsblock 68 übergegangen und der Residuenfaktor Q überprüft.

Ist der Residuenfaktor Q größer als ein vorbestimmter Schwellenwert, ist dies möglicherweise ein Hinweis auf ganz falsch gewählte Grenzwerte 10. Daher werden über einen Zweig 74 Minimalgrenzwerte 75 ausgewählt, die statt der veränderten Grenzwerte als neue Grenzwerte 20 im aktuellen Verarbeitungszyklus n ausgegeben werden. Im Gegensatz zu den eingangs festgelegten Grenzwerten 10 handelt es sich bei den Minimalgrenzwerten 75 um besonders schwache Grenzwerte.

Ist der von dem Plausibilitätsprüfmodul 38 ermittelte Residuenfaktor Q jedoch kleiner als der vorbestimmte Schwellenwert, so wird über den Zweig 76 von dem Entscheidungsblock 68 in den nächsten Verarbeitungszyklus n+1 übergegangen und das erfindungsgemäße Verfahren zum Bestimmen von Zieldaten mit der nächsten Peilwinkelmessung gestartet.

Fig. 6 zeigt eine schematische Darstellung einer Erweiterung des Ausführungsbeispiels gemäß Fig. 2 mit einem Konvergenzphasendetektor 78. Zu Trackbeginn liefert das Optimierungsverfahren aufgrund fehlerhafter Eingangsdaten möglicherweise verschiedene Lösungen, die jedoch gleich wahrscheinlich sind. Befindet sich das Ziel zu Trackbeginn z.B. unter einem kleinen Lagewinkel, schätzt das TMA-Verfahren 26 zunächst unter Umständen eine falsche Geschwindigkeit. Auch das CTMA-Verfahren 6 schätzt trotz richtig gewählter Grenzwerte 10 unter Umständen eine Geschwindigkeit, die auf der Kante des durch die Grenzwerte 10 aufgespannten Lösungsraumes liegt.

Erreicht das TMA-Verfahren 26 jedoch seinen Konvergenzzeitpunkt, so wurden ausreichend Eingangsdaten gesammelt, um eine stabile TMA-Lösung 28 zu erhalten. Nach Erreichen des Konvergenzzeitpunktes liefert eine nachfolgend durchgeführte Kantenprüfung 52, 54 eindeutige Ergebnisse. Daher ist es vorteilhaft die Fehlerbehandlung 14 erst nach Erreichen des Konvergenzzeitpunktes durchzuführen. Zu diesem Zweck wird das vorstehend beschriebene Ausführungsbeispiel gemäß Fig. 2 um einen Konvergenzphasendetektor 78, wie in Fig. 6 dargestellt, erweitert.

Der Konvergenzphasendetektor 78 erhält die TMA-Lösung 28 des TMA-Verfahrens 26, und, wenn vorhanden, die CTMA-Lösung 12 des CTMA-Verfahrens 6.

Mittels eines Vertrauensbereiches, dem sog. Range of Confidence (ROC) des TMA-Verfahrens 26 wird der Konvergenzzeitpunkt des TMA-Verfahrens 26 ermittelt. Bis zum Erreichen des Konvergenzzeitpunktes wird ein Pre-Konvergenzphasensignal 80 ausgegeben und nach dem Erreichen des Konvergenzzeitpunktes ein entsprechendes Post-Konvergenzphasensignal 82. Der Vertrauensbereich (ROC) wird anhand vergangener Schätzwerte aus vergangenen Verarbeitungszyklen des TMA-Verfahrens 26 z.B. aus der Standardabweichung der Zielentfernung ermittelt. Dadurch wird die Stabilität der TMA-Lösung 28 beschrieben.

Zu Trackbeginn deutet ein hoher ROC-Wert darauf hin, dass die TMA-Lösung 28 noch instabil ist und sich das Optimierungsverfahren 26 in der Pre-Konvergenzphase befindet.

Da der Bediener der Sonaranlage oftmals Zusatzinformationen über das Ziel besitzt, kann er unter Berücksichtigung dieser Zusatzinformationen häufig beurteilen, ob die als fehlerhaft erkannten Grenzwerte 10 auch tatsächlich fehlerhaft sind, wenn die CTMA-Lösung 12 auf der Kante des durch die Grenzwerte 10 aufgespannten Lösungsraumes liegt. Daher wird die CTMA-Lösung 12 und/oder die aus der CTMA-Lösung 12 ermittelten temporären Zieldaten R, K, V für die Dauer des Pre-Konvergenzphasensignals 80 zusammen mit den Grenzwerten 10 dem Bediener ausgegeben. Vorteilhafterweise erfolgt die Ausgabe 24 graphisch in derart aufbereiteter Form, so dass der Bediener schon in der Pre-Konvergenzphase die Möglichkeit hat, falsche Grenzwerte 10 zu erkennen. In diesem Fall werden von dem Bediener die Grenzwerte 10 manuell verändert und das Verfahren erneut ausgeführt.

Nach dem Erreichen des Konvergenzzeitpunktes wechselt der Konvergenzphasendetektor 78 in die Post-Konvergenzphase und gibt ein entsprechendes Post-Konvergenzphasensignal 82 aus, welches die Fehlerbehandlung 14 gemäß dem Ausführungsbeispiel von Fig. 2 startet.

Alle in der vorstehenden Beschreibung sowie in den Ansprüchen genannten Merkmale sind erfindungsgemäß sowohl einzeln als auch in beliebiger Kombination miteinander einzetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

**Patentansprüche**

1. Verfahren zum passiven Bestimmen von einem Ziel zugeordneten Zieldaten (R, K, V), insbesondere einer Zielentfemung (R), einem Zielkurs (K) und/oder einer Zielgeschwindigkeit (V), aus durch richtungsselektiven Empfang von von dem Ziel abgestrahlten oder gesendeten Schallwellen mittels einer Anordnung von Wasserschallaufnehmem einer Sonar-Empfangsanlage (2) gemessenen Peilwinkeln (4) und geschätzten Peilwinkein, die aus geschätzten Positionen des Ziels ermittelt werden, wobei mittels wenigstens eines Optimierungsverfahrens (6), nachfolgend als CTMA-Verfahren bezeichnet, Peilwinkeldifferenzen aus den gemessenen Peilwinkeln (4) und den geschätzten Peilwinkeln über mehrere Verarbeitungszyklen iterativ minimiert werden und eine dem Minimum zugrunde liegende geschätzte Position des Zieles als eine optimierte CTMA-Lösung (12) bestimmt wird, aus der temporäre Zieldaten (R, K, V) ermittelt werden und wobei das CTMA-Verfahren (6) vorbestimmte Grenzwerte (10) für die zu bestimmenden Zieldaten (R, K, V) beim Optimieren berücksichtigt,
   **dadurch gekennzeichnet, dass**
   eine Fehlerbehandlung (14) zum Erkennen und Korrigieren fehlerhafter Grenzwerte (10) durchgeführt wird, welche folgende Schritte aufweist:

   a) Überprüfen der Grenzwerte (10) auf evtl. Fehler mittels eines eine Plausibilitätsprüfung zum Erkennen fehlerhafter Grenzwerte (10) durchführenden Plausibilitätsprüfmoduls (38) und
   b)

      i) falls wenigstens ein fehlerhafter Grenzwert (10) erkannt wird: Verändern eines, mehrerer oder aller Grenzwerte (10) nach vorbestimmten Regeln mittels eines Korrekturmoduls (40) und erneutes Durchführen des CTMA-Verfahrens (6) und der Fehlerbehandlung (14) unter Berücksichtigung der veränderten Grenzwerte (20) zum Ermitteln neuer temporärer Zieldaten (R, K, V) und

ii) falls kein fehlerhafter Grenzwert (10) erkannt wird: Ausgeben der optimierten CTMA-Lösung (12) des CTMA-Verfahrens (6) und/oder Ausgeben der aus der CTMA-Lösung (12) ermittelten, als richtig angenommenen Zieldaten (R, K, V).

2. Verfahren nach Anspruch 1,
**dadurch gekennzeichnet, dass**
das Verfahren zusätzlich folgende Schritte aufweist:

a) Ausführen eines weiteren Optimierungsverfahrens (26), nachfolgend als TMA-Verfahren bezeichnet, zum Ermitteln von weiteren temporären Zieldaten ($R_{TMA}$, $K_{TMA}$, $V_{TMA}$) aus einer optimierten TMA-Lösung (28) des TMA-Verfahrens (26), wobei die dem von dem TMA-Verfahren (26) ermitteltem Minimum zugrunde liegende, geschätzte Position des Zieles als die optimierte TMA-Lösung (28) bestimmt wird,

b) Vergleichen dieser temporären Zieldaten ($R_{TMA}$, $K_{TMA}$, $V_{TMA}$) mit den Grenzwerten (10) zum Überprüfen, ob die temporären Zieldaten ($R_{TMA}$, $K_{TMA}$, $V_{TMA}$) innerhalb eines von den Grenzwerten (10) aufgespannten Lösungsraumes liegen und

c)

i) falls kein temporäres Zieldatum ($R_{TMA}$; $K_{TMA}$; $V_{TMA}$) außerhalb des Lösungsraumes erkannt wird: Ausgeben der TMA-Lösung (28) und/oder der aus der TMA-Lösung (28) ermittelten, als richtig angenommenen Zieldaten (R, K, V) und

ii) falls wenigstens ein temporäres Zieldatum ($R_{TMA}$; $K_{TMA}$; $V_{TMA}$) außerhalb des Lösungsraumes erkannt wird: Starten des CTMA-Verfahrens (6) und Durchführen der Fehlerbehandlung (14) zum Erkennen und Korrigieren fehlerhafter Grenzwerte (10).

3. Verfahren nach Anspruch 2,
**dadurch gekennzeichnet, dass**
ein Konvergenzzeitpunkt des TMA-Verfahrens (26) ermittelt wird, wobei für den Fall, dass das CTMA-Verfahren (6) ausgeführt wird, bis zum Erreichen des Konvergenzzeitpunktes die CTMA-Lösung (12) des CTMA-Verfahrens (6) und/oder die aus der CTMA-Lösung (12) ermittelten, als richtig angenommenen Zieldaten (R, K, V) ohne vorheriges Durchführen der Fehlerbehandlung (14) ausgegeben werden und
nach dem Erreichen des Konvergenzzeitpunktes des TMA-Verfahrens (26) die Fehlerbehandlung (14) zum Erkennen und Korrigieren fehlerhafter Grenzwerte (10) durchgeführt wird.

4. Verfahren nach Anspruch 3,
**dadurch gekennzeichnet, dass**
die CTMA-Lösung (12) des CTMA-Verfahrens (6) und/oder die aus der CTMA-Lösung (12) ermittelten, als richtig angenommenen Zieldaten (R, K, V) bis zum Erreichen des Konvergenzzeitpunktes visuell ausgegeben werden und mittels einer Eingabeeinrichtung (8) die Grenzwerte (10) verändert werden.

5. Verfahren nach einem der vorhergehenden Ansprüche,
**dadurch gekennzeichnet, dass**
für die Plausibilitätsprüfung (38) zum Erkennen fehlerhafter Grenzwerte (10) eine Residuenprüfung (42) und/oder eine Kantenprüfung (44) durchgeführt wird.

6. Verfahren nach Anspruch 5,
**dadurch gekennzeichnet, dass**
für die Residuenprüfung (42) ein Residuenfaktor (Q) ermittelt wird, wobei der Residuenfaktor (Q) bei Verwendung von wenigstens zwei Optimierungsverfahren, insbesondere eines TMA-Verfahrens (26) und eines CTMA-Verfahrens (6), aus den jeweiligen Lösungen der Optimierungsverfahren ermittelt wird und der Residuenfaktor (Q) zum Erkennen fehlerhafter Grenzwerte (10) mit wenigstens einem vorbestimmten Schwellenwert verglichen wird.

7. Verfahren nach Anspruch 5 oder 6,
**dadurch gekennzeichnet, dass**
für die Kantenprüfung (44) zum Erkennen fehlerhafter Grenzwerte (10) die Grenzwerte (10) und/oder eine aus den Grenzwerten (10) abgeleiteten Größe, insbesondere Zustandsbeschränkungen, mit der CTMA-Lösung (12) des CTMA-Verfahrens (6) und/oder die aus der CTMA-Lösung (12) ermittelten, temporären Zieldaten (R, K, V) verglichen werden.

**8.** Verfahren nach einem der vorhergehenden Ansprüche,
**dadurch gekennzeichnet, dass**
das Korrigieren der fehlerhaften Grenzwerte (10) mittels des Korrekturmoduls (40) folgende Schritte aufweist:

a) bei Erkennen entweder wenigstens eines fehlerhaften Grenzwertes (10) oder eines fehlerhaften, veränderten Grenzwertes (20), Verändern eines, mehrerer oder aller Grenzwerte (10; 20) und/oder eines den Grenzwert (10; 20) aufweisenden, zugehörigen Grenzwert-Intervalls und erneutes Durchführen des CTMA-Verfahrens (6) und der Fehlertiehandlung (14) im aktuellen Verarbeitungszyklus unter Berücksichtigung veränderter Grenzwerte,
b) bei erneutem Erkennen wenigstens eines fehlerhaften, veränderten Grenzwertes (20) Wiederholen von Schritt a) im aktuellen Verarbeitungszyklus,
c) bei erneutem Erkennen wenigstens eines fehlerhaften, veränderten Grenzwertes (20) und nach mehrmaligem Durchführen von Schritt a) erneutes Durchführen des CTMA-Verfahrens (6) und der Fehlerbehandlung (14) im aktuellen Verarbeitungszyklus unter Berücksichtigung vorbestimmter Minimalgrenzwerte oder
erneutes Durchführen des CTMA-Verfahrens (6) und der Fehlerbehandlung (14) im nächsten Verarbeitungszyklus mit erneut gemessenen Peilwinkeln (4) und unter Berücksichtigung vorbestimmter Grenzwerte (10).

**9.** Verfahren nach einem der vorhergehenden Ansprüche,
**dadurch gekennzeichnet, dass**
ein Zielmanöver bei dem Durchführen des CTMA-Verfahrens (6) berücksichtigt wird, indem das CTMA-Verfahren (6) zwei Ziellegs berechnet, wobei für das ursprüngliche Zielleg die ursprünglichen Grenzwerte (10) berücksichtigt werden und für das neue Zielleg neue Grenzwerte festgelegt werden.

**10.** Vorrichtung zur passiven Bestimmung von einem Ziel zugeordneten Zieldaten (R, K, V), insbesondere einer Zielentfernung (R), einem Zielkurs (K) und/oder einer Zielgeschwindigkeit (V), aus durch richtungsselektiven Empfang von von dem Ziel abgestrahlten oder gesendeten Schallwellen mit einer Anordnung von Wasserschallaufnehmern einer Sonar-Empfangsanlage (2) messbaren Peilwinkeln (4) und schätzbaren Peilwinkeln, die aus geschätzten Positionen des Ziels ermittelbar sind, wobei mittels wenigstens eines Optimierungsverfahrens (6), nachfolgend als CTMA-Verfahren bezeichnet, Peilwinkeldifferenzen aus den gemessenen Peilwinkeln (4) und den geschätzten Peilwinkeln über mehrere Verarbeitungszyklen iterativ minimiert werden und eine dem Minimum zugrundeliegende geschätzte Position des Zieles als eine optimierte CTMA-Lösung (12) bestimmbar ist, aus der temporäre Zieldaten (R, K, V) ermittelt werden wobei vorbestimmte Grenzwerte (10) für die zu bestimmenden Zieldaten (R, K, V) bei der Optimierung mittels des CTMA-Verfahrens (6) berücksichtigt werden, insbesondere zur Durchführung eines Verfahrens nach einem der Ansprüche 1 bis 9, **gekennzeichnet durch**
eine Fehlerbehandlungseinrichtung (14), die derart ausgebildet ist, fehlerhafte Grenzwerte (10) zu erkennen und zu korrigieren, wobei die Fehlerbehandlungseinrichtung (14) ein Plausibilitätsprüfmodul (38) und ein Korrekturmodul (40) aufweist,
das Plausibilitätsprüfmodul (38), welches derart ausgebildet ist, um fehlerhafte Grenzwerte (10) zu erkennen,
das Korrekturmodul (40), welches derart ausgebildet ist, um fehlerhafte Grenzwerte (10) zu korrigieren und
eine Ausgabeeinheit (24) zur Ausgabe der optimierten CTMA-Lösung (12) des CTMA-Verfahrens (6) und/oder zur Ausgabe der aus der CTMA-Lösung (12) ermittelbaren, als richtig angenommenen Zieldaten (R, K, V) für den Fall, dass mittels des Plausibilitätsprüfmoduls (38) keine fehlerhaften Grenzwerte (10) erkennbar sind.

**11.** Vorrichtung nach Anspruch 10,
**dadurch gekennzeichnet, dass**
das Plausibilitätsprüfmodul (38) ein Residuenprüfmodul (42) und/oder ein Kantenprüfmodul (44) aufweist, wobei das Residuenprüfmodul (42) und das Kantenprüfmodul (44) derart ausgebildet sind, um fehlerhafte Grenzwerte zu erkennen.

**12.** Vorrichtung nach einem der Ansprüche 10 bis 11,
**gekennzeichnet durch**
eine Prüfeinrichtung (30), welche derart ausgebildet ist, um zu überprüfen, ob temporäre Zieldaten ($R_{TMA}$, $K_{TMA}$, $V_{TMA}$), welche aus einer optimierten Lösung (28) eines weiteren Optimierungsverfahrens (26), nachfolgend als TMA-Verfahren bezeichnet, ermittelbar sind, innerhalb eines von den Grenzwerten (10) aufspannbaren Lösungsraumes liegen, wobei die dem von dem TMA-Verfahren (26) ermittelbaren Minimum zugrunde liegende geschätzte Position des Zieles als die optimierte TMA-Lösung (28) bestimmbar ist.

**13.** Vorrichtung nach Anspruch 12,
**gekennzeichnet durch**
einen Konvergenzphasendetektor (78), welcher derart ausgebildet ist, um einen Konvergenzzeitpunkt des TMA-Verfahrens (26) zu ermitteln.

**14.** Vorrichtung nach einem der Ansprüche 10 bis 13,
**gekennzeichnet durch**
Mittel zur Durchführung eines, mehrerer oder aller Verfahrensschritte gemäß einem der Ansprüche 1 bis 9.

**15.** Computerprogramm, welches Computerprogrammcodemittel aufweist, die für die Ausführung des Verfahrens nach einem der Ansprüche 1 bis 9 geeignet sind, wenn das Programm auf einem Computer ausgeführt wird.

**Claims**

**1.** Method for passive determination of target data (R, K, V) associated with a target, in particular of a target range (R), a target course (K) and/or a target velocity (V), from bearing angles (4), which are measured by means of an arrangement of water-borne sound sensors of a sonar receiving installation (2) by directionally selective reception of sound waves emitted or sent from the target, and from estimated bearing angles, which are determined from estimated positions of the target, with bearing angle differences from the measured bearing angles (4) and the estimated bearing angles being iteratively minimized over a plurality of processing cycles by means of at least one optimization method (6), referred to in the following text as a CTMA method, and with an estimated position of the target, on which the minimum is based, being determined as an optimized CTMA solution (12), from which the temporary target data (R, K, V) is determined, and with the CTMA method (6) taking account of predetermined limit values (10) for the target data (R, K, V) to be determined, during the optimization process, **characterized in that** an error handling process (14) is carried out for identification and correction of incorrect limit values (10), which process has the following steps:

a) limit values (10) are checked for possible errors by means of a plausibility test module (38) carrying out a plausibility test for identification of incorrect limit values (10) and
b)

i) if at least one incorrect limit value (10) is identified: one, a plurality or all of the limit values (10) are changed using predetermined rules by means of a correction module (40), and the CTMA method (6) and the error handling process (14) are carried out again, taking account of the changed limit values (20) for determination of new temporary target data (R, K, V) and
ii) if no incorrect limit value (10) is identified: the optimized CTMA solution (12) from the CTMA method (6) is output, and/or the target data (R, K, V) which has been determined from the CTMA solution (12) and is assumed to be correct is output.

**2.** Method according to Claim 1,
**characterized in that**
the method additionally has the following steps:

a) a further optimization method (26) is carried out, referred to in the following text as a TMA method, for determination of further temporary target data ($R_{TMA}$, $K_{TMA}$, $V_{TMA}$) from an optimized TMA solution (28) of the TMA method (26), with the estimated position of the target, on which the minimum determined by the TMA method (26) is based, being determined as the optimized TMA solution (28),
b) this temporary target data ($R_{TMA}$, $K_{TMA}$, $V_{TMA}$) is compared with the limit values (10) in order to check whether the temporary target data ($R_{TMA}$, $K_{TMA}$, $V_{TMA}$) is within a solution space which is covered by the limit values (10), and
c)

i) if no temporary target data item ($R_{TMA}$; $K_{TMA}$; $V_{TMA}$) is identified outside the solution space: the TMA solution (28) is output, and/or the targe data (R, K, V) which has been determined from the TMA solution (28) and is assumed to be correct is output, and
ii) if at least one temporary target data item ($R_{TMA}$; $K_{TMA}$; $V_{TMA}$) is identified outside the solution space: the CTMA method (6) is started and the error handling process (14) for identification and correction of incorrect

12

limit values (10) is carried out.

3. Method according to Claim 2,
   **characterized in that**
   a convergence time of the TMA method (26) is determined, with the CTMA solution (12) from the:

   > CTMA method (6) being output for the situation in which the CTMA method (6) is carried out until the convergence time is reached, and/or the target data (R, K, V) which was determined from the CTMA solution (12) and is assumed to be correct is output without previously carrying out the error handling process (14), and
   > after reaching the convergence time of the TMA method (26), the error handling process (14) for identification and correction of incorrect limit values (10) is carried out.

4. Method according to Claim 3,
   **characterized in that**
   the CTMA solution (12) from the CTMA method (6) and/or the target data (R, K, V) which has been determined from the CTMA solution (12) and is assumed to be correct are/is output visually until the convergence time is reached, and the limit values (10) are changed by means of an input device (8).

5. Method according to one of the preceding claims, **characterized in that**
   a residue test (42) and/or an edge test (44) are/is carried out for the plausibility test (38) for identification of incorrect limit values (10).

6. Method according to Claim 5,
   **characterized in that**
   a residue factor (Q) is determined for the residue test (42), with the residue factor (Q) being determined from the respective solutions of the optimization methods using least two optimization methods, in particular a TMA method (26) and a CTMA method (6), and with the residue factor (Q) being compared with at least one predetermined threshold value for identification of incorrect limit values (10).

7. Method according to Claim 5 or 6,
   **characterized in that**,
   for the edge test (44) for identification of incorrect limit values (10), the limit values (10) and/or a variable which is derived from the limit values (10), in particular state restrictions, are/is compared with the CTMA solution (12) from the CTMA method (6), and/or the temporary target data (R, K, V) which has been obtained from the CTMA solution (12).

8. Method according to one of the preceding claims, **characterized in that**
   the correction of the incorrect limit values (10) by means of the correction module (40) has the following steps:

   > a) when either at least one incorrect limit value (10) or an incorrect, changed limit value (20) is identified, one, a plurality or all of the limit values (10; 20) and/or an associated limit value interval which has the limit value (10; 20) are/is changed, and the CTMA method (6) and the error handling process (14) are carried out once again in the current processing cycle, taking account of the changed limit values,
   > b) when at least one incorrect, changed limit value (20) is identified again, step a) is repeated in the current processing cycle,
   > c) when at least one incorrect, changed limit value (20) is identified again, and after step a) has been carried out a plurality of times, the CTMA method (6) and the error handling process (14) are carried out again in the current processing cycle, taking account of predetermined minimum limit values, or
   > the CTMA method (6) and the error handling process (14) are carried out again in the next processing cycle, with bearing angles (4) being measured again, and taking account of predetermined limit values (10).

9. Method according to one of the preceding claims, **characterized in that**
   a target manoeuvre while carrying out the CTMA method (6) is taken into account by the CTMA method (6) calculating two target legs, with the original limit values (10) being taken into account for the original target leg, and with new limit values being defined for the new target leg,

10. Apparatus for passive determination of target data (R, K, V) associated with a target, in particular of a target range (R) , a target course (K) and/or a target velocity (V), from bearing angles (4), which can be measured by means of an arrangement of water-borne sound sensors of a sonar receiving installation (2) by directionally selective reception of sound waves emitted or sent from the target, and from estimatable bearing angles, which can be determined from estimated positions of the target, with bearing angle differences from the measured bearing angles (4) and the estimated bearing angles being iteratively minimized over a plurality of processing cycles by means of at least one optimization method (6), referred to in the following text as a CTMA method, and with an estimated position of the target, on which the minimum is based, can be determined as an optimized CTMA solution (12), from which the temporary target data (R, K, V) is determined, and with predetermined limit values (10) for the target data (R, K, V) to be determined are taken into account during the optimization utilizing the CTMA method (6), in particular for carrying out a method according to one of Claims 1 to 9, **characterized by**

an error handling device (14) which is designed to identify and to correct incorrect limit values (10), with the error handling device (14) having a plausibility test module (38) and a correction module (40),

the plausibility test module (38), which is designed to identify incorrect limit values (10), the correction module (40), which is designed to correct incorrect limit values (10), and

an output unit (24) for outputting the optimized CTMA solution (12) from the CTMA method (6) and/or for outputting the target data (R, K, V) which can be determined from the CTMA solution (12) and is assumed to be correct, for the solution in which no incorrect limit values (10) can be identified by means of the plausibility test module (38).

11. Apparatus according to Claim 10, **characterized in that**
the plausibility test module (38) has a residue test module (42) and/or an edge test module (44), with the residue test module (42) and the edge test module (44) being designed to identify incorrect limit values.

12. Apparatus according to one of Claims 10 or 11, **characterized by**
a test device (30), which is designed to test whether temporary target data ($R_{TMA}$, $K_{TMA}$, $V_{TMA}$) which can be determined from an optimized solution (28) of a further optimization method (26), referred to in the following text as a TMA method, is within a solution space which can be covered by the limit values (10), in which case the estimated position of the target on which the minimum which can be determined by the TMA method (26) is based can be determined as the optimized TMA solution (28).

13. Apparatus according to Claim 12,
**characterized by**
a convergence phase detector (78), which is designed to determine a convergent time of the: TMA method (26).

14. Apparatus according to one of Claims 0 to 13, **characterized by**
means for carrying out one, a plurality of or all of the method steps according to one of Claims 1 to 9.

15. Computer program, which has computer program code means which are suitable for carrying out the method according to one of Claims 1 to 9 when the program is run on a computer.

**Revendications**

1. Procédé de détermination passive de données de cible (R, K, V) associées à une cible, notamment d'une distance de cible (R), d'une route de cible (K) et/ou d'une vitesse de cible (V) à partir d'angles de relèvement (4) mesurés par réception à sélectivité directionnelle d'ondes sonores dégagées ou émises par la cible au moyen d'un arrangement d'enregistreurs sonores sous-marins d'un équipement de réception à sonar (2) et d'angles de relèvement estimés, lesquels sont déterminés à partir des positions estimées de la cible, les différences d'angles de relèvement entre les angles de relèvement mesurés (4) et les angles de relèvement estimés étant minimisées de manière itérative sur plusieurs cycles de traitement au moyen d'au moins un procédé d'optimisation (6), appelé ci-après procédé CTMA, et une position estimée de la cible se basant sur le minimum étant définie comme une solution CTMA optimisée (12) à partir de laquelle sont déterminées des données de cible (R, K, V) temporaires et le procédé CTMA (6) tenant compte lors de l'optimisation de valeurs limites (10) prédéfinies pour les données de cible (R, K, V) à définir,
**caractérisé en ce**
**qu'**un traitement des erreurs (14) est effectué pour détecter et corriger les valeurs limites erronées (10), lequel présente les étapes suivantes :

a) contrôle des valeurs limites (10) pour vérifier si elles contiennent éventuellement des erreurs au moyen d'un module de contrôle de plausibilité (38) qui effectue un contrôle de plausibilité pour détecter les valeurs limites (10) erronées et

b)

i) si au moins une valeur limite (10) erronée est détectée : modification d'une, de plusieurs ou de toutes les valeurs limites (10) d'après des règles prédéfinies au moyen d'un module de correction (40) et nouvelle exécution du procédé CTMA (6) et du traitement des erreurs (14) en tenant compte des valeurs limites (20) modifiées pour déterminer de nouvelles données de cible (R, K, V) temporaires et

ii) si aucune valeur limite (10) erronée n'est détectée : délivrance de la solution CTMA optimisée (12) du procédé CTMA (6) et/ou délivrance des données de cible (R, K, V) déterminées à partir de la solution CTMA (12) et supposées justes.

2. Procédé selon la revendication 1, **caractérisé en ce que** le procédé comprend en plus les étapes suivantes :

a) exécution d'un procédé d'optimisation supplémentaire (26), appelé ci-après procédé TMA, pour déterminer des données de cible ($R_{TMA}$, $K_{TMA}$, $V_{TMA}$) temporaires supplémentaires à partir d'une solution TMA optimisée (28) du procédé TMA (26), la position de la cible estimée sur laquelle se base le minimum déterminé par le procédé TMA (26) étant définie comme la solution TMA optimisée (28),

b) comparaison de ces données de cible ($R_{TMA}$, $K_{TMA}$, $V_{TMA}$) temporaires avec les valeurs limites (10) pour vérifier si les données de cible ($R_{TMA}$, $K_{TMA}$, $V_{TMA}$) temporaires se trouvent à l'intérieur d'un espace de solution délimité par les valeurs limites (10) et

c)

i) si ancune donnée de cible ($R_{TMA}$; $K_{TMA}$; $V_{TMA}$) temporaire n'est détectée à l'extérieur l'espace de solution : délivrance de la solution TMA (28) et/ou des données de cible (R, K, V) déterminées à partir de la solution TMA (28) et supposées justes et

ii) si au moins une donnée de module ($R_{TMA}$; $K_{TMA}$;

$V_{TMA}$) temporaire est détectée à l'extérieur de l'espace de solution : démarrage du procédé CTMA (6) et réalisation du traitement des erreurs (14) pour détecter et corriger les valeurs limites (10) erronées.

3. Procédé selon la revendication 2,
**caractérisé en ce**
**qu'**un instant de convergence du procédé TMA (26) est déterminé, la solution CTMA (12) du procédé CTMA (6) et/ou les données de cible (R, K, V) déterminées à partir de la solution CTMA (12) et supposées justes étant délivrées jusqu'à ce que le point de convergence soit atteint sans réaliser préalablement le traitement des erreurs (14) dans le cas où le procédé CTMA (6) est exécuté et
le traitement des erreurs (14) pour détecter et corriger les valeurs limites (10) erronées est effectué après avoir atteint le point de convergence du procédé TMA (26) .

4. Procédé selon la revendication 3,
**caractérisé en ce que**
la solution CTMA (12) du procédé CTMA (6) et/ou les données de cible (R, K, V) déterminées partir de la solution CTMA (12) et supposées justes sont délivrées visuellement jusqu'à ce que le point de convergence soit atteint et les valeurs limites (10) sont modifiées au moyen d'un dispositif de saisie (8).

5. Procédé selon l'une des revendications précédentes,
**caractérisé en ce**
**qu'**un contrôle de résidus (42) et/ou un contrôle des bords (44) est effectué pour le contrôle de plausibilité (38) pour détecter les valeurs limites (10) erronées.

6. Procédé selon la revendication 5,
**caractérisé en ce**
**qu'**un facteur de résidu (Q) est déterminé pour le contrôle de résidus (42), le facteur de résidu (Q) étant déterminé en utilisant au moins deux procédés d'optimisation, notamment un procédé TMA (26) et un procédé CTMA (6), à partir des solutions respectives des procédés d'optimisation et le facteur de résidu (Q) étant comparé avec au moins une valeur de seuil prédéfinie pour détecter les valeur limites (10) erronées.

7. Procédé selon la revendication 5 ou 6, **caractérisé en ce que**
pour le contrôle des bords (44) pour détecter les valeurs limites (10) erronées, les valeurs limites (10) et/ou une grandeur dérivée des valeurs limites (10), notamment des restrictions d'état, son comparées avec la solution CTMA (12) du procédé CTMA (6) et/ou les données de cible (R, K, V) temporaires déterminées à partir de la solution CTMA (12).

**8.** Procédé selon l'une des revendications précédentes,
**caractérisé en ce que**
la correction des valeurs limites (10) erronées au moyen du module de correction (40) comprend les étapes suivantes :

    a) en cas de détection soit d'au moins une valeur limite (10) erronée, soit d'une valeur limite modifiée (20) erronée, modification d'une, de plusieurs ou de toutes les valeurs limites (10; 20) et/ou d' un intervalle de valeurs limites associé qui présente la valeur limite (10; 20), et nouvelle exécution du procédé CTMA (6) et du traitement des erreurs (14) dans le cycle de traitement courant en tenant compte des valeurs limites modifiées,
    b) en cas de nouvelle détection d'au moins une valeur limite modifiée (20) erronée, répétition de l'étape a) dans le cycle de traitement courant,
    c) en cas de nouvelle détection d'au moins une valeur limite modifiée (20) erronée et après plusieurs réalisations de l'étape a), nouvelle exécution du procédé CTMA (6) et du traitement des erreurs (14) dans le cycle de traitement courant en tenant compte de valeurs limites minimales prédéfinies ou nouvelle exécution du procédé CTMA (6) et du traitement des erreurs (14) dans le cycle de traitement suivant avec de nouveaux angles de relèvement (4) mesurés et en tenant compte de valeurs limites (10) prédéfinies.

**9.** Procédé selon l'une des revendications précédentes,
**caractérisé en ce**
**qu'**une manoeuvre de la cible est prise en compte lors de la réalisation du procédé CTMA (6) par le fait que le procédé CTMA (6) calcule deux branches de cible, les valeurs limites (10) originelles étant prises en compte pour la branche de cible originelle et de nouvelles valeurs limites étant calculées pour la nouvelle branche de cible.

**10.** Dispositif de détermination passive de données de cible (R, K, V) associées à une cible, notamment d'une distance de cible (R), d'une route de cible (K) et/ou d'une vitesse de cible (V) à partir d'angles de relèvement (4) pouvant être mesurés par réception à sélectivité directionnelle d'ondes sonores dégagées ou émises par la cible avec un arrangement d'enregistreurs sonores sous-marins d'un équipement de réception à sonar (2) et d'angles de relèvement pouvant être estimés, lesquels peuvent être détermineés à partir des positions estimées de la cible, les différences d'angles de relèvement entre les angles de relèvement mesurés (4) et les angles de relèvement estimés étant minimisées de manière itérative sur plusieurs cycles de traitement au moyen d'au moins un procédé d'optimisation (6), appelé ci-après procédé CTMA, et une position estimée de la cible se basant sur le minimum pouvant être définie comme une solution CTMA optimisée (12) à partir de laquelle sont déterminées des données de cible (R, K, V) temporaires et des valeurs limites (10) prédéfinies pour les données de cible (R, K, V) 4 définir étant prises en compte par procédé CTMA (6) lors de l'optimisation, notamment pour mettre en oeuvre un procédé selon l'une des revendications 1 à 9,
**caractérisé par**
un dispositif de traitement des erreurs (14) qui est configuré pour détecter et corriger les valeurs limites (10) erronées, le dispositif de traitement des erreurs (14) présentant un module de contrôle de plausibilité (38) et un module de correction (40),
le module de contrôle de plausibilité (38) qui est configuré pour détecter les valeur limites (10) erronées,
le module de correction (40) qui est configuré pour corriger les valeurs limites (10) erronées, et
une unité de sortie (24) pour délivrer la solution CTMA optimisée (12) du procédé CTMA (6) et/ou pour délivrer les données de cible (R, K, V) pouvant être déterminées à partir de la solution CTMA (12) et supposées justes dans le cas où aucune valeur limite (10) erronée ne peut être détectée au moyen du module de contrôle de plausibilité (38).

**11.** Dispositif selon la revendication 10, **caractérisé en ce que**
le module de contrôle de plausibilité (38) présente un module de contrôle de résidus (42) et/ou un module de contrôle des bords (14), le module de contrôle de résidus (42) et le module de contrôle des bords (44) étant configurés pour détecter des valeurs limites (10) erronées.

**12.** Dispositif selon l'une des revendications 10 et 11,
**caractérisé par**
un dispositif de contrôle (30) qui est configuré pour vérifier si des données de cible ($R_{TMA}$, $K_{TMA}$, $V_{TMA}$) temporaires, lesquelles peuvent être déterminées à partir d'une solution optimisée (28) d'un procédé d'optimisation supplémentaire (26), appelé ci-aprés procédé TMA, se trouvent à l'intérieur d'un espace de solution pouvant être délimité par les valeurs limites (10), la position de la cible estimée sur laquelle se base le minimum qui peut être détermine par le procédé TMA (26) pouvant être définie comme la solution TMA optimisée (28).

**13.** Dispositif selon la revendication 2, **caractérisé par**
un détecteur de phase de convergence (78) qui est configuré pour déterminer un instant de convergence du procédé TMA (26).

**14.** Dispositif selon l'une des revendications 10 13,
**caractérisé par**
des moyens pour exécuter une, plusieurs ou la totalité des étapes du procédé selon l'une des revendications 1 à 9.

**15.** Programme informatique, lequel présente des moyens de code de programme informatique qui conviennent pour la mise en oeuvre du procédé selon l'une des revendications 1 à 9 lorsque le programme est exécuté sur un ordinateur.

Fig. 1

Fig. 2

*Fig. 3*

*Fig. 4*

*Fig. 5*

*Fig. 6*

**IN DER BESCHREIBUNG AUFGEFÜHRTE DOKUMENTE**

**In der Beschreibung aufgeführte Patentdokumente**

- DE 3446658 C2
- EP 1531339 A2